# EUROPEAN PATENT APPLICATION

(11) **EP 1 637 984 A2**
(43) Date of publication of application: **22.03.2006**
(21) Application number: 05291626.9
(22) Date of filing: 29.07.2005
(51) Int. Cl.: G06F 3/033

(54) **Gamepad controller mapping**

(30) Priority: 21.09.2004 US 947621
(71) Applicant: Guillemot Corporation, 35135 Chantepie (FR)
(72) Inventor: Peng, Chi Fu, Chung Li City (TW)
(74) Representative: Breese Derambure Majerowicz

(57) **Abstract**

Embodiments of the inventions include a gamepad that supports an internal mapping system. A user may remap functions associated with any input mechanism of the gamepad to any other input mechanism. The gamepad may include extra, non-standard, input mechanisms. Mapping may be stored internal to the gamepad.

## Description

### Field of the Invention

The invention relates to input devices for computers and gaming console devices. Specifically, the invention relates to the mapping of the control functions to the input mechanisms of the input device.

### Background

Input devices for use with computers and console devices include mice, joysticks, racing wheels, trackballs and specialized gamepads. These input devices are standardized for each platform. The input devices are compatible with a single platform, such as a personal computer or specific game console. A PlayStation, by Sony Corp. supports a gamepad with a standard set of input mechanisms. The PlayStation gamepad has eight standard game buttons, two mini-sticks, a cross-pad, an analog button, select button and start button. Other game consoles, such as the Xbox, by Microsoft Corp. and the GameCube, by Nintendo Inc., have similar gamepad designs.

The function associated (i.e., firing weapons in a game, software navigation) with each of the input mechanisms of a gamepad for each platform is dependent on the software application, e.g. a video game, with which the gamepad is utilized. The software application has a standard or default mapping of functions to the input mechanisms of the gamepad. The software application may support different configurations in the form of pre-set mappings that may be selected through the software application. These pre-set mappings are specific to the software application. The mappings are saved in memory cards or devices attached to the game console or hard drives of a personal computer. If a software application does not support remapping then only the default mapping can be used. Mappings are not shared across software applications.

### BRIEF DESCRIPTION OF THE DRAWINGS

Embodiments of the invention are illustrated by way of example and not by way of limitation in the figures of the accompanying drawings in which like references indicate similar elements. It should be noted that references to "an" or "one" embodiment in this disclosure are not necessarily to the same embodiment, and such references mean at least one.

**Figure 1A** is a diagram with a top view of one embodiment of a gamepad.

**Figure 1B** is a diagram with a side view of one embodiment of a gamepad.

**Figure 1C** is a diagram with a front view of one embodiment of a gamepad.

**Figure 2** is a diagram of one embodiment of the components of the gamepad.

**Figure 3** is flowchart of one embodiment of a process for mapping functions to input mechanisms of a gamepad.

**Figure 4** is a flowchart of one embodiment of a process for resolving input conflicts.

**Figure 5** is a diagram of one embodiment of a game system.

### DETAILED DESCRIPTION

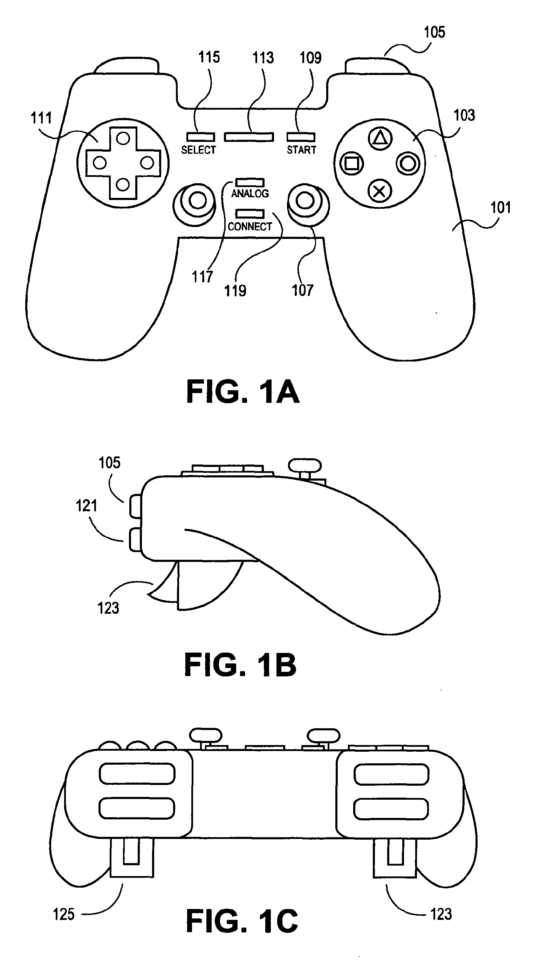

**Figures 1A-1C** are diagrams of one embodiment of an input device with a mapping function. The input device illustrated in **Figures 1A-1C** is in the form of a PlayStation compatible gamepad. The modified Playstation gamepad is discussed herein as an example embodiment for purpose of convenience. In other embodiments, the input device may be a design compatible with other game consoles such as the Xbox by Microsoft, GameCube by Nintendo or similar game console system, personal computers, or a design compatible with multiple game consoles or personal computers. In further embodiments, the input device may be a joystick, gamepad, mouse, racing wheel, trackball, keypad or similar input device.

**Figure 1A** is a diagram of one embodiment of an input device with a mapping function. In one embodiment, an input device may have a housing 101 to be held by a user. The housing 101 may be designed to be held by two hands or a single hand. The housing may define surfaces to be gripped by a user. The input device may have any shape or design. In another embodiment, the input device may be designed to rest on a surface during use. In a further embodiment, the input device may be attached to another item or mountable on another item such as a desk.

In one embodiment, the input device may have input mechanisms that may be used to generate an input to the personal computer or console device. The input mechanisms may be buttons, triggers, pads, ministicks, joysticks, racing wheels, trackballs or similar input mechanisms. Input mechanisms may be used to interact with a software application or gaming system.

In one embodiment, the input device may have a set of standard buttons 103. The standard buttons may be simple digital or analog input buttons. In one embodiment, the buttons may be progressive buttons. A progressive input mechanism may generate a different input signal to the accompanying system based on the depth or degree to which the input mechanism is activated or the duration of the activation. A progressive input mechanism may generate an analog signal or a digital signal. For example, the progressive input mechanisms may generate 256 distinct signals or separate output levels to implement the progressive input mechanism. A progressive input mechanism may have any output value range. For example, a progressive trigger mechanism may have an output value range of 0 to 256. Slightly depressing the trigger may generate an output near one end of the range and fully depressing the trigger may generate an output value at the other end of the range. The same input mechanism may have an analog and digital mode. In one embodiment, an analog mode may be the default mode. Buttons 103 may be used for standard software application interface functions. The buttons 103 may be assigned functions that are commonly used for the software application interface. For example, standard buttons 103 when used with a combat flight simulating video game may fire guns or missiles.

In one embodiment, the input device may have a set of secondary 'left-right' buttons 105. These left-right buttons 105 may be positioned on each side of the input device. The left-right buttons 105 may be situated in any part of the housing. In one embodiment, the left-right buttons may be positioned in the front portion of the housing. The left-right buttons 105 may be used for standard software application interface functions. The buttons 105 may be assigned functions that are less commonly used than the functions assigned to the standard buttons 103.

In one embodiment, the input device may include a set of directional input devices. The directional input devices may be a cross pad 111, ministicks 107 or similar directional input mechanisms. The input device may have any number of directional input devices. The directional input devices may be situated on either side of the housing. The directional input devices may be used for standard software application interface functions. The directional input devices may be assigned functions that are related to the movement of an avatar, a camera position, pointer or similar orientation related function. In one embodiment, the directional input devices may be progressive. In another embodiment, other directional input mechanisms may include trackballs, full joysticks and similar devices.

In one embodiment, the input device may include a set of additional specialized input buttons 109,113, 115, 117 and 119. These buttons may allow a user to select 115 a game option, start 109 a software application, toggle 117 input mechanisms between an analog and digital mode, connect 119 wirelessly to a computer system or console device, initiate a mapping of functions 113, initiate a turbo mode (e.g., a mode where maintaining a button or input mechanism in an activated state simulates a rapid repeated activation of the input mechanism for use in rapid fire or similar activities) or similar specialized function. In one embodiment, a specialized input button may be assigned computer system and console level functions or similar functions not directly associated with a software application. The specialized input button may be positioned in a central part of an input device housing or in any other position on the housing.

In one embodiment, the input device may be connected to a computer system or console device by a wire connection, such as a specialized console connection, universal serial bus (USB) type connection, Bluetooth connection, FireWire connection or similar connection. In another embodiment, the input device may use wireless communication to communicate with the computer system or console device. A transmitter may be housed within the input device and a receiver may be housed within the computer system or console or may be attached to the computer system or console. A wireless input device may include a rechargeable power source such as rechargeable batteries. In one embodiment, the input device may have a power saving mode to conserve battery power. The power saving mode may be entered after a defined period of non use such as five minutes of non use or a similar time period.

In one embodiment, the input device may have a number of buttons that correspond to the standard buttons of a particular platform. For example, a Sony PlayStation 2 console supports a gamepad that has four standard buttons 103, a select button 115, four left-right buttons 105, a start button 109 and an analog button 117. The PlayStation 2 console also supports two ministicks 107 and a cross pad 111. Gamepads for use with other console devices and computer systems support different configurations, types and numbers of buttons.

**Figure 1B** is a side view of a diagram of an example gamepad. The side view shows a non-standard trigger button 123. Figure 1B also illustrates the placement of lower left-right buttons 121. Figure 1C is a front view diagram of one embodiment of the example gamepad. The front view shows a second non-standard trigger button 125. As used herein the term "non-standard" when referring to an input mechanism denotes an input mechanism that is not part of a standard set of input mechanisms for a specific platform. The non-standard trigger buttons 123,125 typically will not have default functions assigned to them. For example, the standard PlayStation 2 gamepad does not have a set of trigger buttons. A standard Xbox gamepad has two trigger mechanisms and an Xbox gamepad modified in accordance with the embodiments of the invention may have an additional set of trigger mechanisms, e.g., four total triggers. Standard gamepads for use with personal computer don't have any progressive triggers. A modified gamepad for use with personal computers may have two non-standard progressive triggers. In one embodiment, the trigger buttons may be progressive input mechanisms. Progressive trigger buttons are efficient and accurate input mechanisms for use with progressive functions. The trigger mechanism has a wider range of movement with a higher degree of controllability than other input mechanisms making it ideal for use as a progressive input mechanism. Being able to map functions onto the non-standard progressive trigger mechanisms provides a user a higher degree of control over actions than use of other input mechanisms in many scenarios. In another embodiment the trigger could be replaced by any input mechanism having a long degree of circular or linear movement such as a trackball or a scroll (e.g., a wheel in a personal computer mouse).

In one embodiment, the non-standard trigger buttons may be assigned a redundant default function internal to the input device. For example, the trigger buttons 123, 125 may have the same function as one or two of the standard buttons 103. Pressing either the standard button or the trigger buttons may generate the same input to the computer system or console device.

In one embodiment, the configuration or mapping of functions to each of the input mechanisms may be adjustable internal to the input device. The mapping of functions may be stored internal to the input device. The input device may have a default configuration stored internally. The default configuration may correspond to the conventional configuration of an input device for an associated platform. For example, an 'X' button for a gamepad compatible to the PlayStation 2 console device may be initially mapped to the 'X' button function. In one embodiment, any function may be mapped to any input mechanism independent of the computer system, console device or software application. The mappings may be of partial functions including a partial axis of direction input mechanism. For example, partial output ranges for progressive input mechanisms may be mapped onto one another or have different functions assigned to different output subranges. The mappings may be stored internal to the input device. The mapping system and internal storage provides a user with a high degree of granularity in configuring the use of the input device and allows the user to alter the configuration at any time. Mapping functions to non-standard triggers may not delete the default functions assigned to the standard buttons.

In one embodiment, the input device may be back-lighted or retro-lighted using LEDs or similar light generating devices to enable the user to map functions to input mechanism or play even while in the dark. Pressing or activating an input mechanism may activate an LED. The color or intensity of the LED activation may correspond to the progressive output level or the state of the mapping configuration process.

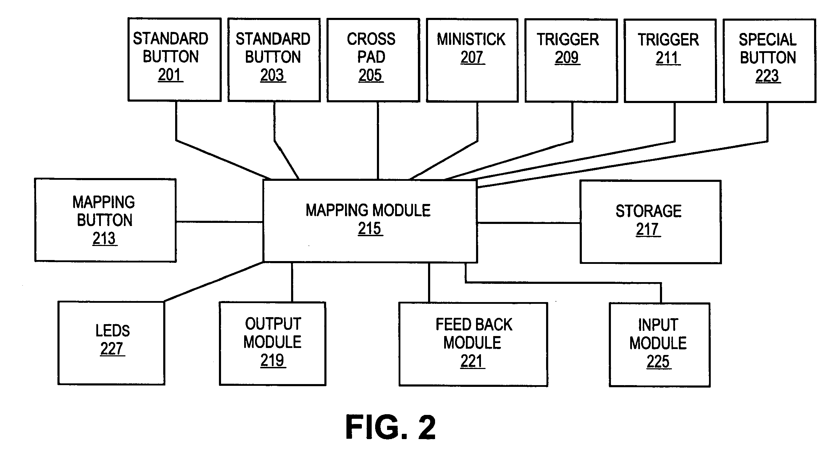

**Figure 2** is a block diagram of one embodiment of the components of an input device. In one embodiment, the input device may include a set of input mechanisms. The input mechanisms may include any number of standard buttons 201, 203. The input mechanisms may include a cross pad 205, ministick 207 or similar directional input mechanisms. The input mechanisms may also include special buttons 223. The input device may have any number of input mechanisms and any configuration of types of input devices.

In one embodiment, the input device may include input mechanisms that are not standard for an associated platform. For example, the input device may include non-standard progressive trigger mechanisms 209, 211. The non-standard input mechanisms may not have any standard function mapped onto them. In one embodiment, the mapping of functions to the non-standard input mechanisms may be redundant to standard input mechanisms. In a further embodiment, the mapping of a function to an input mechanism may be a mapping of a partial function. For example, a platform may support a ministick that has an x and y axis. An entire axis, such as an x-axis or a portion of an axis such as half of an x-axis may be mapped onto an input mechanism including a non standard input mechanism. As used herein a "portion of an axis" for an input mechanism such as a ministick denotes any range of a progressive input mechanism (e.g., an axis of a ministick may have an output range of 0 to 255, a portion may be any subset of that range or may be the entire range). In another embodiment, the mapping of a function may be directed to a standard progressive triggers or similar standard input mechanism. In a further embodiment, a standard input mechanism may have its function deleted through the mapping mechanism if the function is non-essential. If a function on a standard input mechanism is essential, the mapping of a function onto the standard input mechanism may swap the essential function to another input mechanism.

In one embodiment, the mapping of functions to input mechanisms is controlled by a mapping module 215. The mapping module 215 may route signals generated by an input mechanism to an output module 219. The mapping module 215 may also alter or transform the signal received from the input mechanism dependent on the function mapped onto the input mechanism. For example, if a standard 'X' button has been mapped onto a progressive trigger button, then complete depression of the trigger may generate a rapid 'X' button signal repeat to the output module 219.

In one embodiment, the output module receives internal input signals from the input mechanisms either directly or through a mapping module 215. The output module 219 transforms the internal signals into signals that can be transmitted over a wire or wirelessly to the associated computer system or console device. In one embodiment, the output module 219 may transmit a wireless signal to a receiver attached to the console device or computer system. In another embodiment, the output module 219 may drive a signal or set of signals over a wire or set of wires to a specialized input port on a console or computer system. In a further embodiment, the output module may drive a signal or set of signals over a standard communications system such as a universal serial bus (USB) or similar system to a computer system or console device.

In one embodiment, a mapping button 213 or similar input mechanism may be utilized to assist in reconfiguring the mappings in a device or setting up special mapping functions such as a turbo function. Depressing a mapping button 213 may place the input device and mapping module in a reconfiguration or mapping mode. The mapping mode may be used to generate new mappings to overwrite old mappings or to alter old mappings. In one embodiment, these mappings may be stored to a storage device 217. In one embodiment, the storage device 217 may be a non-volatile memory device. For example, the storage device 217 may be an electronically erasable read only memory (EEPROM) or similar storage device. In one embodiment, the non-volatile storage device may work in combination with a volatile memory device capable of storing mapping data while the input device has power. In one embodiment, the storage device 217 may store multiple mappings. The multiple mappings may be selected by use of the mapping button 213 or similar specialized button or a combination of the mapping button 213 or similar specialized button with other buttons. In a further embodiment, the non-volatile storage device may be removeably coupled to the input device. The removable storage device may be inserted into other input devices by a user that desires to utilize stored mappings when using another input device.

In one embodiment, the input device may have an input module 225 for receiving information from an associated computer system or console device. The input module 225 may be a receiver for a wireless system or wired system. Information received from the computer system or console may be to direct the operation of a feedback module 221. Feedback module 221 may be a circuit or similar system for driving a motor such as a pulse width modulated (PWM) motor or similar device to generate a feedback sensation to a user. The feedback may be generated in response to the state of the current software application. In one embodiment, the feedback module 221 may be driven directly by input mechanisms in the input device. In one embodiment, information received from the computer system or console device may set or alter the mappings of the input device. In one embodiment, the feedback system may be utilized as part of the mapping system. During a mapping process the feedback module 221 may activate the feedback system to indicate the progress of the mapping process. For example, the feedback system may generate a 'rumble' when a mapping mode has been entered.

In one embodiment, the input device may include a set of light emitting diodes (LEDs) or similar devices. The LEDs may be utilized to indicate the reception of input from input mechanisms. The LEDs may be used to back-light or retro-light buttons for playing in dark areas. In one embodiment, the LEDs may be utilized as part of the mapping process. An LED may be activated in a flashing pattern to indicate that a mapping mode has been initiated. In one embodiment, standard buttons and other input mechanisms may have associated LEDs that light up during a mapping process. Different colors of LEDs may be utilized to indicate different modes. For example, depressing a mapping button may result in an associated LED flashing to indicate a mapping mode had been entered. A standard button may be depressed to indicate a function to be mapped and an associated LED may be activated with a blue color to indicate a function selection. Another input mechanism may then be activated as a destination for the function resulting in another LED being activated with a red color to indicate a target selection.

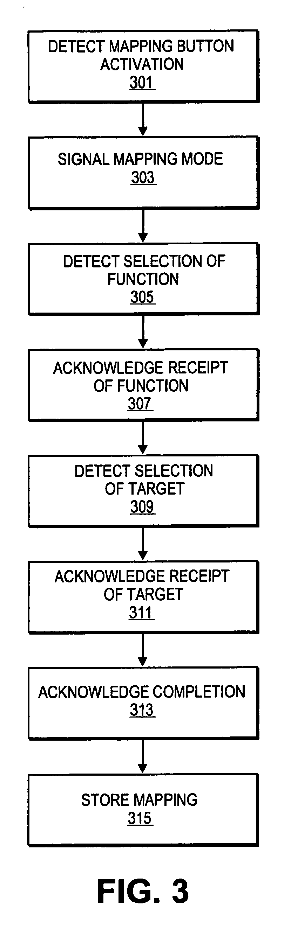

**Figure 3** is one embodiment of a process for mapping functions in an input device. In one embodiment, the mapping process may be entirely local to the input device and operate independent of the associated computer system or console device. In one embodiment, the mapping process may be initiated by the detection of a mapping button activation or similar input mechanism activation (block 301). The receipt of the mapping button input may initiate a mapping mode. In one embodiment, the reception of the mapping button input or the initiation of the mapping mode may be indicated by a feedback to the user (block 303). The feedback to the user may include an activation of a feedback mechanism such as a feedback motor to create a 'rumble' or the activation of an LED. The LED may be activated in a flashing pattern or an LED of a defined color may be activated.

In one embodiment, after the initiation of the mapping mode the input device awaits a selection of a function to be mapped. The function to be mapped may be selected by activating an input mechanism (block 305). The input mechanism may be activated once to indicate the standard function of the input mechanism. In one embodiment, an input mechanism may be activated multiple times or partially activated, e.g. with a progressive function, to indicate a non standard function or a partial function. For example, a turbo function may be selected by activating two input mechanisms simultaneously or a half axis of ministick may be selected by moving the ministick through that half axis. Once the selection of the function sequence completes or the expiration of a timer occurs, an acknowledgement of the function may be given to the user (block 307). The receipt of a function may be acknowledged by activating an LED, flashing an LED in a pattern, activating a color coded LED, generating a 'rumble' from the feedback system or through similar feedback mechanisms. Failure to select a function may result in a different indicator of the same nature being generated.

In one embodiment, the mapping mode may await the selection of a target input mechanism onto which to map the function (block 309). A target input mechanism may be selected by full or partial activation of the input mechanism. For example, a trigger may be assigned an 'X' button function by depressing the trigger during this stage of the process. Once the selection of the target sequence completes or the expiration of a timer occurs, an acknowledgement of the target may be given to the user (block 311). The receipt of a target may be acknowledged by activating an LED, flashing an LED in a pattern, activating a color coded LED, generating a'rumble' from the feedback system or through similar feedback mechanisms.

In one embodiment, the mapping mode may end after receiving the target. An acknowledgement of the completion of the mapping mode may be given to the user (block 313). The completion of the mapping may be acknowledged by activating an LED, flashing an LED in a pattern, activating a color coded LED, generating a 'rumble' from the feedback system or through similar feedback mechanisms. In another embodiment, the mapping mode may continue in a loop until an end mapping mode input is received. This may be a specialized mapping mode to be used when a number or remappings are desired.

In one embodiment, the new mapping may be stored in an internal storage device 315. This mapping may be retrieved for future use on restart of the input device or the associated computer system or console device. For example, on system or input device restart the last mapping stored or utilized may be restored. In one embodiment, the stored mapping may be selected during use of the input device to replace the current mapping. An internal storage device may have a set number of slots for mappings and a user may select a mapping by indicating a slot of the mapping. Alternatively, the mappings may be cycled through. The details of the mappings may be displayed through LEDs or by similar means. For example, the details of a mapping may be displayed to a user by the flashing of LEDs for functions and target input mechanisms.

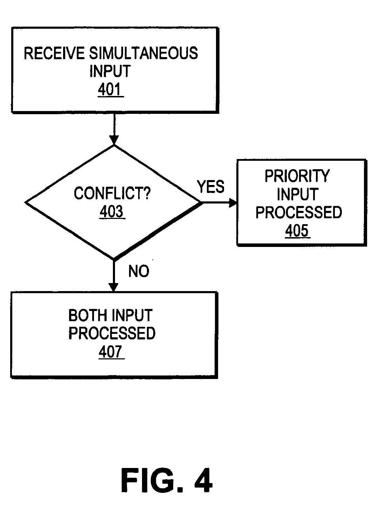

**Figure 4** is a diagram of one embodiment of a process for handling conflicting input. In one embodiment, a mapping may create a scenario where conflicting inputs may be simultaneously generated by the input device. For example, a half axis of a ministick corresponding to the left half of the x-axis may be mapped onto a left trigger button and the right half of the x-axis may be mapped onto a right trigger button. If a user activates both triggers simultaneously a conflict may be avoided even though the two inputs are mutually exclusive by designating one of the inputs as a overriding the other input.

In one embodiment, the input device awaits the reception of an activation of an input mechanism (block 401). If the activation of an input mechanism occurs at the same time that another input mechanism is activated then a conflict check may be initiated (block 403). A conflict may be caused by the activation of any mutually exclusive inputs. If a conflict is detected then a priority is determined for the inputs (block 405). A priority scheme may be used to determine which input is processed. In one embodiment, the priority scheme may prioritize input mechanisms. For example, the trigger buttons may have a priority over the standard buttons. In another embodiment, the priority scheme may prioritize directional input based on the left-right, up-down, forward-backward or similar directional dichotomies. For example, a left half of an x-axis mapped to a trigger may be prioritized over a right half of an x axis mapped to another trigger. An input with a lower priority may be ignored or processed subsequent to the higher priority input.

In one embodiment, if the simultaneous inputs do not have a conflict, such as mutually exclusive input, then both inputs may be processed (block 407). For example in a racing video game, an acceleration pedal and braking pedal may be both processed at the same time to controllably skid in the corners. An arbitrary order for processing may be utilized or a prioritized order may be utilized. Both inputs may be processed simultaneously if parallel processing is supported. For example, a conflict may occur when the same function is mapped to separate input mechanisms. A user may map the same function to separate input mechanisms to allow the use of the function with different combinations of input mechanisms or finger positions. A conflict may be resolved when the two input mechanisms are simultaneously depressed by giving one an override priority over the other input mechanism.

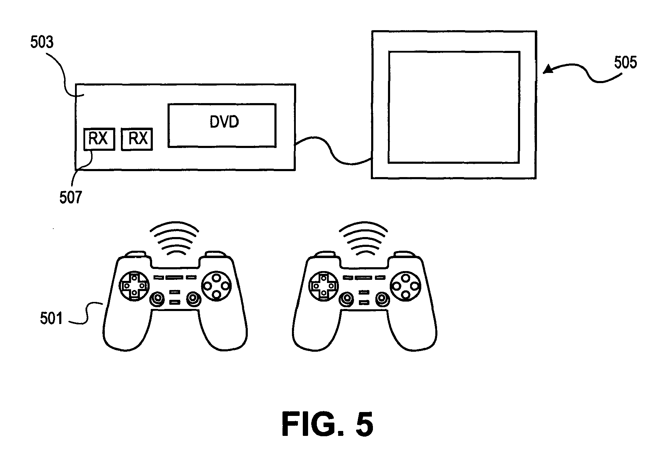

**Figure 5** is a diagram of one embodiment of a system with an independently remappable input device. In one embodiment, the system may include multiple input devices 501. The input devices may be gamepads, joysticks, mice, trackballs or similar input devices. The input devices may have any number of input mechanisms. The default functionality of any input mechanism and additional functions may be mapped to any input mechanism in the input device through the mapping interface provided in the input device. The mappings may be stored within the input device. The stored mappings may be used independent of the computer system or console device that the input device 501 may be connected with.

In one embodiment, the input device 501 may be connected to a computer system or console device 503. The connection may be a wireless connection or may be a wire line connection. The wireless system may include a transmitting device within the input device 501 and a receiving device 507 attached to the computer or console or within the computer or console. A wire line system may use a specialized system or a general standard system such as a USB connection. The computer system may be any personal computer system, workstation or similar system. The system may be a console device such as a Sony PlayStation, Microsoft Xbox, Nintendo GameCube or similar system. The computer system or console device may be connected to a monitor device such as a television 505, LCD display or similar display device.

In one embodiment, the mapping function may be implemented in software and stored in a machine readable medium. A machine readable medium may be any media storage device capable of storing instructions and data. Instructions and data may be in the form of microcode. Machine readable media may include but are not limited to optical disks, magnetic disks, random access memory modules, read-only memory modules, radio frequency signals, analog communication devices and similar storage and communication media.

In the foregoing specification, the invention has been described with reference to specific embodiments thereof. It will, however, be evident that various modifications and changes can be made thereto without departing from the broader spirit and scope of the invention as set forth in the appended claims. The specification and drawings are, accordingly, to be regarded in an illustrative rather than a restrictive sense.

## Claims

1. A device comprising:
a first input mechanism housed within the device, the first input mechanism to activate a function; and
a mapping mechanism coupled to the first input mechanism to initiate and control mapping of a portion of an axis of a second input mechanism to the first input mechanism independent of external devices and software.

2. The device of claim1, wherein the first input mechanism is a non-standard input mechanism.

3. The device of claim 1, further comprising:
a storage mechanism coupled to the mapping mechanism to store a mapping for the first input mechanism, the storage mechanism internal to the device.

4. The device of claim 2, further comprising:
a ministick coupled to the device; and
a second non-standard input mechanism to provide a progressive input signal.

5. The device of claim 1, wherein the first input mechanism is a first trigger.

6. The device of claim 5, wherein the mapping mechanism maps a turbo function to the trigger, the turbo function to be activated by a progressive input signal from the trigger.

7. The device of claim 3, wherein the storage mechanism is an electronically erasable and programmable memory device.

8. The device of claim 1, wherein the device is compatible with multiple platforms.

9. The device of claim 5, further comprising:
a second trigger,
wherein if the second trigger activates a first function that conflicts with a second function activated by the first trigger, then the first function overrides the second function.

10. The device of claim 1, further comprising:
a feedback mechanism,
wherein feedback control is responsive to input from a remapped function.

11. The device of claim 1, further comprising:
a wireless communication mechanism.

12. The device of claim 1, further comprising:
a backup battery to maintain data stored in the storage device.

13. The device of claim 1, wherein the storage device stores multiple mapping configurations.

14. The device of claim 1, further comprising:
a retro-lighting for an input mechanism.

15. A method comprising:
receiving an input to activate a configuration system;
receiving an indicator of a portion of an axis of a first input mechanism in an input device; and
mapping the portion of the axis to a second input mechanism, the mapping initiated and controlled within the input device.

16. The method of claim 15, wherein the first input mechanism is a ministick.

17. The method of claims 15, further comprising:
storing a mapping in a storage device in the input device.

18. The method of claim 15, further comprising:
providing a feedback indicator of a configuration mode.

19. The method of claim 17, further comprising:
retrieving the mapping from the storage device on system power up.

20. A system comprising:
a processor to execute a software application;
an input device in communication with the processor, the input device providing a mapping mechanism that operates independent of the software application, the mapping mechanism to allow a mapping of a portion of an axis of a first input mechanism to a second input mechanism.

21. The system of claim 20, wherein the input device comprises:
a storage device to store input device mappings.

22. The system of claim 20, wherein the input device comprises:
a set of non-standard progressive trigger buttons.

23. The system of claim 20, wherein the input device comprises:
a light emitting diode to provide mapping mode feedback to a user.

24. The system of claim 20, wherein the input device is compatible with at least two platforms.

25. An apparatus comprising:
means for receiving an input from a user in an input device; and
means for mapping a portion of an axis of an input mechanism to the means for receiving the input, the means for mapping disposed within the input device.

26. The apparatus of claim 25, further comprising:
means for storing a mapping of a function within the apparatus.

27. The apparatus of claim 25, wherein the input mechanism a ministick.

28. The apparatus of claim 25, further comprising:
means for providing mapping feedback to a user.

29. A machine readable medium having instructions stored therein, which when executed cause a machine to perform a set of operations comprising:
receiving an input to activate a configuration system;
receiving an indicator of a portion of an axis of a first input mechanism in an input device; and
mapping the portion of the axis to a second input mechanism, the mapping initiated and controlled within the input device.

30. The machine readable medium of claim 29, having further instructions stored therein which when executed cause a machine to perform a set of operations further comprising:
storing a mapping in a storage device in the input device.

31. The machine readable medium of claim 29, having further instructions stored therein which when executed cause a machine to perform a set of operations, further comprising:
providing a feedback indicator of a mapping mode.

32. The machine readable medium of claim 30, having further instructions stored therein which when executed cause a machine to perform a set of operations, further comprising:
retrieving the mapping from the storage device on system power up.

33. The machine readable medium of claim 29, wherein the first input mechanism is a ministick.

34. A device comprising:
a first non-standard input mechanism housed within the device, the first non-standard input mechanism to activate a function; and
a mapping mechanism coupled to the first non-standard input mechanism to initiate and control mapping of a function to the first non-standard input mechanism independent of external devices and software.

35. The device of claim 34, wherein the first non-standard input mechanism is a progressive input mechanism.

36. The device of claim 34, wherein the first non-standard input mechanism is a trigger.
